# EUROPEAN PATENT APPLICATION

(11) **EP 2 112 732 A1**
(43) Date of publication of application: **28.10.2009**
(21) Application number: 09380080.3
(22) Date of filing: 17.04.2009
(51) Int. Cl.: H02G 3/06

(54) **Raceway for electrical conductors and retainer applicable to said raceway**

(30) Priority: 25.04.2008 ES 200800861 U; 28.04.2008 ES 200800870 U
(71) Applicant: Unex Aparellaje Electrico S.L., 08903 L'Hospitalet de Llobregat (Barcelona) (ES)
(72) Inventor: Salcedo Suñol, Eloi, 08620 Sant Vincenc dels Horts (Barcelona) (ES)
(74) Representative: Curell Aguilà, Marcelino

(57) **Abstract**

Raceway for electrical conductors and retainer applicable in said raceway. Raceway (1) has on its walls (3) an inclined marginal area, its top face having a seating tab (6) that is parallel to bottom wall (2) and which forms, together with the inclined marginal area and the channel-shaped edge (4) of the raceway, a tubular section in cantilever arrangement from the free end of which there emerges a short anchoring wing perpendicular to bottom wall (2). Retainer (20) is an oblong single part (21) with a "U"-shaped straight section, made up of separable, longitudinal parts. The two end parts are provided with attachment means for attaching to walls (3) of raceway (1), consisting of an elastic clamp made up of two flat flanges (24) and a hooked elastic finger (25). The inner parts are provided with attachment means for attaching to the raceway's detachable compartment partitions.

## Description

### Field of the invention

This invention relates to a raceway for electrical conductors, in particular one of the type that is made by extruding synthetic plastics material and configured as a channel-shaped section made up of a bottom strip that is flanked orthogonally by two opposite, symmetrical walls, with respect to a middle plane perpendicular to the bottom strip, which form at the free end thereof a channel-shaped edge for fitting a cover section. The width of the bottom and the height of the walls can be variable, without said walls loosing their symmetry, so as to achieve a wide range of raceways.

The raceways of this type, which the invention refers to, are organized so that they are provided with means to enable the firm attachment of, on the one hand, detachable cross members intended to retain the cables installed in the raceway and, on the other hand, the end of one raceway section with the end of another raceway section that is axially contiguous therewith.

The invention also relates to an electrical conductor retainer applicable to the raceway according to the invention.

### State of the art

As for the raceway, documents ES2027981T3, ES2223347T3 and ES2266321T3 are known, which refer to raceways having a slat in cantilever arrangement which, ending in a thickened free end and being arranged on the inner face of the marginal upper area of the free edge of the raceway walls, is intended to act as a support for elements retaining the conductors that are housed in the raceway, with said retainer elements being attached at their ends, like bridges, to said slats in cantilever arrangement.

The preceding seating arrangement of the retainer devices suffers from the drawback that their construction is weak and, where the raceway houses a considerable number of electrical conductors, the weight of said electrical conductors on the retainers causes the latter to deform the support slats and therefore cause said retainers to become detached from their support points.

As for the retainer, several patents are known, wherein different retainer devices for electrical conductors housed in raceways and conductor trays are disclosed, as in the cases contemplated in the following paragraphs.

Document ES2027981T3 relates to a retainer consisting of a staple made up of a single part with no pre-cut sections for adapting the length of said staple by removing some of the portions and, which also has its two ends with different formal and functional characteristics, whereby one end behaves like a hinged clamp and the other one is simply applied against the edge of the raceway by the pushing action caused by the elasticity of the other end .

The object of document ES2174563T3 is a retainer consisting of a staple that is not a single piece, and which is instead made up of the association of a bottom metal part and a top part made from synthetic material.

Document ES2223347T3 relates to a retainer consisting of a clamp which, at one of its ends, has a foot like an elastic grab with a heel and a nail which enable it to adopt two stable clamp positions: one a waiting position and the other a position working as a retainer, while the other end of said clamp has a head provided with an attachment nail and an assembly wedge, so that by pressing, the head moves behind a closure section provided on the edge of the raceway and the nail is retained in a thickened part of said closure section.

Document ES2266321T3 discloses a retainer in which the attachment staples are joined into pairs at their feet, and each pair of staples is joined to another identical pair, so that the staples can be separated, to perform their retainer function, into four independent staples, which allows to adapt the retainer to two possible lengths: one determined by a pair of aligned staples and one corresponding to a single loose staple.

All these known staples, which perform the function of retaining electrical conductors housed in a raceway, without therefore excluding their possible use in suitable trays, suffer from the drawback that they either require more attention during assembly, or they do not allow their length to be adapted effectively to the various widths of the raceway compartments.

The applicant is owner of Spanish patent ES2014604, wherein retainer staples are made up of a rigid part, substantially flat and elongated, which covers the width of a raceway between the top ends of the side walls of said raceway, said part having transverse swerving grooves that separate some modular parts joined together by side flaps stemming from the base of the part, and which are provided with grooves that weaken the thickness and can be broken. Said parts have on their opposite sides one or two mutually alternated lugs that are elastically inserted in tubular endings formed on the top edges of the raceway compartment partitions. The ends of the rigid part consist of a base, with reduced thickness for elastic flexibility, limited by a bead, side flaps and end pins with an outer stump that is inserted into openings formed in the endings of the raceway walls, by the elastic area being compressed and then expanding. This solution suffers from the drawback that it is only appropriate for raceways that have said openings in the endings on the side walls, and it is expensive to make said openings.

### Disclosure of the invention

In order to overcome said drawback, the solution has been adopted to reshape, inside the raceway, the structure of the support means for said retainer elements by adopting a three-dimensional shape so as to obtain greater rigidity, and form the retainers so that they are made up of a single part that has its ends the same and which can be split maintaining the possibility of attaching it to the raceway and/or to the longitudinal compartment partitions that may be placed at the bottom of the raceway.

According to the preceding solution, the raceway that is the object of this invention has been developed, which consists of a raceway of the type cited at the beginning, **characterized in that** the top end of each of the opposite walls has a inclined marginal area, which is tilted upwards and towards the inside of the raceway, and on the top face of said inclined marginal area a seating flap is arranged that is parallel to the bottom strip and which forms, together with said inclined marginal area and the channel-shaped edge, a tubular section in cantilever arrangement from the free end of which there emerges a short anchoring wing perpendicular to said bottom strip.

Also, according to the preceding solution, the retainer according to the invention for electrical cables has been developed, which is made up of a single oblong part that has a "U"-shaped straight section and which differentiates in a plurality of separable, longitudinal parts, with the two end parts being the same and being provided with the same attachment means suitable for attaching to the top ends of the opposite side walls of the raceway, whereas the inner parts have a different structure from said end parts and have attachment means suitable for attaching to the top seamed edges of detachable, longitudinal compartment partitions that may be provided in the raceway. The retainer according to the invention is **characterized in that** said attachment means on the end parts, suitable for attaching to the top ends of the opposite side walls of the raceway, are made up of an elastic clamp arrangement that has two flat, coplanar flanges, which are separated and in cantilever arrangement, and an elastic hooked finger facing the separation space between said flat flanges.

With respect to the raceway according to the invention, preferably, the inclined marginal area on the top end of the opposite walls establishes a space for locating the channel-shaped edge, and said channel-shaped edge is made up of a straight portion followed by an arched portion that opens towards said inclined marginal area and projects over it without projecting out of it, with said straight portion emerging from said inclined marginal area and extending to the seating flap, which emerges orthogonally from the back of said straight portion, so that the end of said seating flap coincides, together with the end of said inclined marginal area, in a narrow vertical slat that projects forming the anchoring wing that is in cantilever arrangement looking towards the bottom strip.

Preferably, from the inner face of said inclined marginal area at the free end of the wall, near said wall, a small partition emerges parallel to said wall.

Preferably, at the side ends of the bottom strip, near the intersection of said bottom strip with the bottom portion of each opposite wall, a wedge-shaped projection is arranged which has its tilted side looking towards the middle plane of said bottom strip and has its short side parallel to the bottom portion of said wall, and from the inner face of the inclined marginal area at the free end of the wall, there emerges a small partition that is parallel to said wall and coplanar with the short side of the wedge-shaped projection and coplanar with said small partition.

Preferably, said small partition is provided, on its face which looks towards the inner face of the wall, with a toothed form which has its apices pointing towards said inner face.

As for the retainer according to the invention, preferably, it comprises wall fragments corresponding to each of the branches of said "U"-shaped straight section of the oblong single part, and bottom fragments corresponding to the base of said "U"-shaped straight section, with the contiguous separable parts being joined together by breakage lines provided in areas where said bottom fragments and said wall fragments join, with breakage bridges being provided between each wall fragment and contiguous wall fragment, and said retainer comprises projecting flaps that emerge orthogonally from said wall fragments and are coplanar with said bottom fragments.

Preferably, said projecting flaps have a slight, longitudinal arch on their cantilever edge.

### Brief description of the drawings

To facilitate the understanding of the foregoing ideas, some preferred embodiments of the invention are described below, of a raceway for electrical conductors and a retainer applicable to said raceway, with reference to the accompanying drawings which, given their merely illustrative character, do not affect the scope of the invention, and in which:
Fig. 1 is a straight cross-section of a raceway for electrical conductors made according to the characteristics of the object of the invention.
Fig. 2 is a perspective view of a retainer for electrical conductors carried by said raceway according to the invention. This view shows in the foreground the top face of the retainer, in other words the face that looks outwards when the retainer is positioned in the raceway.
Fig. 3 is a bottom plan view of the retainer in Fig. 2.
Fig. 4, is a side elevation view of the retainer in Fig. 2 along the side on which the projecting flaps appear. An end part of the retainer is shown sectioned according to the sectional plane indicated in Fig. 5.
Fig. 5 is a top plan view of the retainer in Fig. 2.
Fig. 6 is a cross section of a raceway for electrical conductors as in Fig. 1, without longitudinal compartment partitions, wherein the retainer in Figs. 2 to 5 has been inserted, which is illustrated showing the side with the projecting flaps.
Fig. 7, is a sectioned view of a wall of a raceway such as the one in Fig. 1, wherein the retainer from Figs. 2 to 5 is installed waiting to be used.
Fig. 8 is a perspective view of a raceway like the one in Fig. 1, provided with means for fixing longitudinal compartment partitions, wherein the retainer in Figs. 2 to 5 is shown, made up of a complete, oblong single part, attached to the raceway from wall to wall, as well as an oblong single part that has been separated from a retainer like the one in Figs. 2 to 5 and which is attached between a raceway wall and a central compartment partition.
Fig. 9 is a cross sectional view of the raceway in Fig. 8.

### Detailed description of some embodiments of the invention

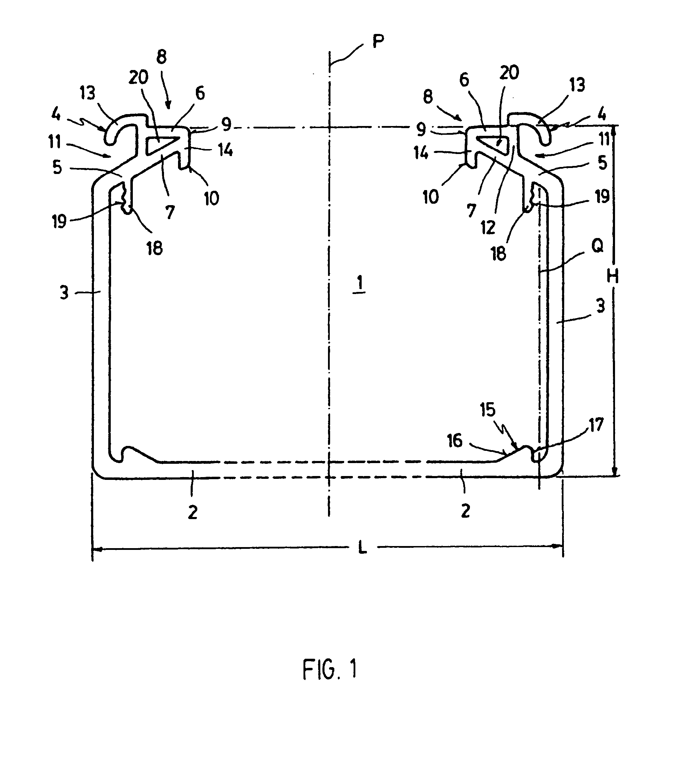

Fig. 1 shows shows a raceway 1 for laying electrical conductors that is one of the known type, particularly one of the type that is made by extruding a synthetic plastics material and configured as a channel-shaped section made up of a bottom strip 2 that is flanked orthogonally by two equal opposite walls 3 that form at their free end a channel-shaped edge 4 for fitting a cover section ( not shown), wherein the width of the bottom L and the height H of the walls can be variable, without said walls losing their specular symmetry with respect to a plane that is central and perpendicular to the bottom strip 2, all for the purpose of achieving a wide range of dimensions for raceways1.

Essentially the object of the invention lies in the fact that on the top face of an inclined marginal area 5 at the top end of each wall 3 of raceway 1, which is tilted inwards and upwards, with relative specular symmetry with respect to a middle plane P perpendicular to bottom strip 2, a seating flap 6 is arranged that is parallel to said bottom strip 2 and which forms, with an extension 7 of said inclined marginal area 5 and with the channel-shaped edge 4, a tubular section 8 in cantilever arrangement from the free end 9 of which there emerges an anchoring wing 10 that is perpendicular to said bottom strip 2.

According to a preferred embodiment of the invention, the top portion of the free edge of walls 3 comprises marginal area 5 tilted towards the inside of raceway 1 with the aim of establishing a space 11 for locating the channel-shaped edge 4, which is formed by a straight portion 12 followed by a portion 13 arched towards the outside, which, as it is open towards said inclined marginal area 5 and projects over said inclined marginal area 5 without projecting out of it, is complementary to the edge of a closing cover for the raceway (not shown), while said straight portion 12 of channel-shaped edge 4, that emerges from said inclined marginal area 5, extends in a flat, horizontal seating flap 6 that emerges orthogonally from the back of said straight portion 12, so that its cantilever edge coincides together with the cantilever end of inclined marginal area 5 in a narrow, vertical slat 14 that extends into short anchoring wing 10 in cantilever arrangement towards bottom strip 2.

On one part of the edge of bottom strip 2, that is next to the intersection thereof with the bottom portion of wall 3, a wedge shaped projection 15 is provided having its inclined side 16 tilted towards the centre of bottom strip 2 and its short side 17, which is parallel to the bottom portion of wall 3, lying in a plane Q which, while also being parallel to said wall 3, coincides with a small partition 18 that emerges from the inner face of inclined marginal area 5 on the free end of said wall 3 of raceway 1, and is parallel thereto.

As can be seen in Fig. 1, the short anchoring wing 10, that is in cantilever arrangement towards bottom strip 2, has an edge biselled as a convex curve. Small partition 18, which is parallel to the inner face of the contiguous wall of the raceway, has on its face that looks towards said inner face of wall 3 a toothed form 19 that has its apices pointing towards said face.

Also, it is worth highlighting that inclined marginal area 5 on the free end of walls 3, straight portion 12 of channel-shaped edge 4 and seating flap 6 define a hollow space 20 with a triangular cross-section.

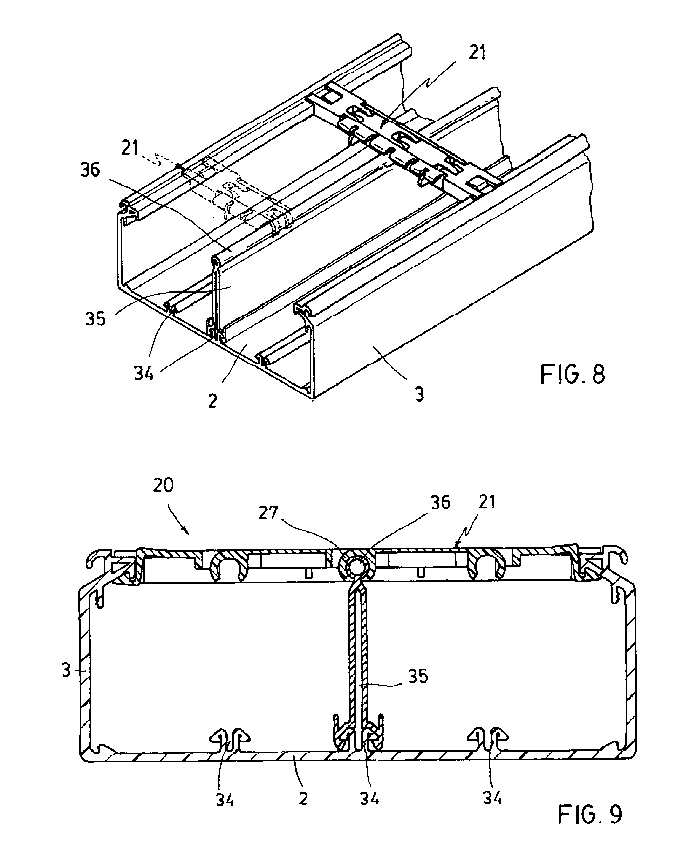

As shown in Figs. 8 and 9, bottom strip 2 of raceway 1 can be provided with anchoring means 34, of a known type, to removably insert longitudinal compartment partitions 35 in which retainer 20 can be attached, fitting some parts thereof on top seamed edge 36 of said compartment partitions 35.

In a raceway 1 as above, a retainer 20 according to the invention can be applied, which, as shown in Figs. 1 to 4, is made up of an oblong single part 21 that has a "U"-shaped straight section and which is differentiated in a plurality of separable, longitudinal parts, with the two end parts 22 being the same and being provided with the same attachment means for attaching to the top ends of raceway 1, whereas the remaining inner parts 23, which have a different structure from that of the end parts 22, are provided with attachment means, which are different from those provided on said end parts 22, for attaching to the top seamed edges 36 of the compartment partitions 35 which may be arranged in raceway 1.

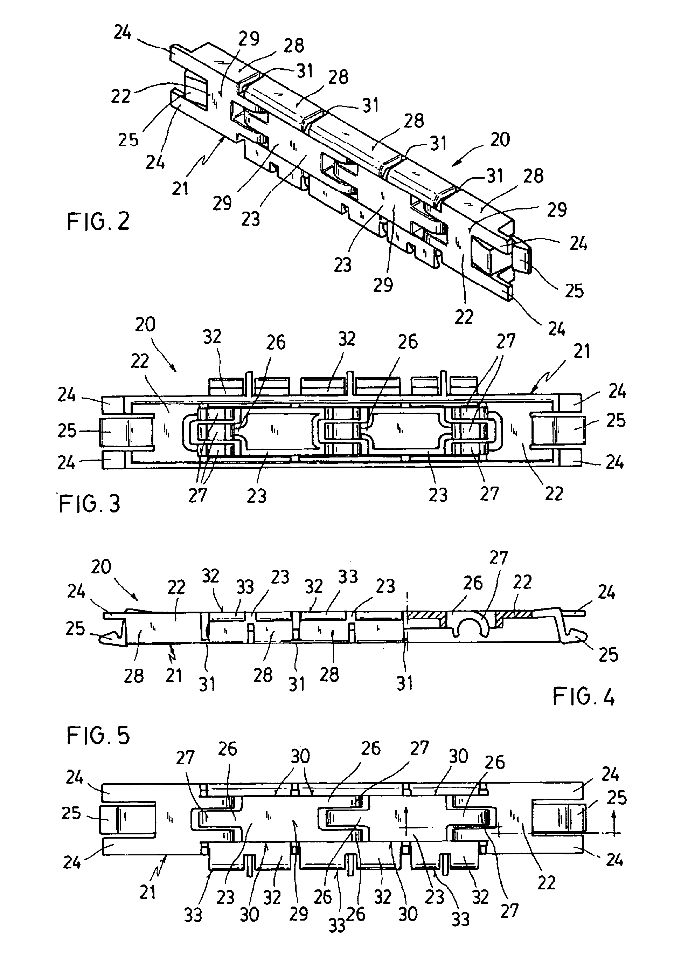

The attachment means of end longitudinal parts 22 of oblong single part 21, as shown in Fig. 4, are made up of an elastic clamp arrangement that has two flat coplanar flanges 24 that are separate and in cantilever arrangement, and are complemented with a hooked elastic finger 25 facing the separation space between said flat flanges 24.

The attachment means of inner parts 23, which, as can be seen in Fig. 8, are functional after at least one of end parts 22 has been separated, are made up of simple cantilever arms 26 ending in open pressure clamps 27. Arms 26 are provided, at each end of inner parts 23, either arranged individually in the centre, or in pairs with one at each end of the width of said inner part 23. As can be seen in Figs. 2 to 5, end parts 22 are also provided, on their inner end coinciding with the end of contiguous inner part 23, with the arms 26 described for inner parts 23. All such that arms 26 of each two contiguous parts are juxtaposed in an arrangement of three, both in the case of two contiguous inner parts 23 as in the case of one contiguous inner part 23 and end part 22.

Each end part 22 and inner part 23 of oblong single part 21 comprises a wall fragment 28 corresponding to each branch of its "U"-shaped section and a bottom wall fragment 29 corresponding to the base of said "U"-shaped section, with each of said parts, end 22 or inner 23, being joined to the contiguous parts by wall fragments 28, and being provided with breakage lines 30 in the joining areas of the bottom fragment 29 of the base with the wall fragments 28 of the "U"-shaped section branches, and being provided with breakage bridges 31 between every two wall fragments 28.

Oblong single part 21, in each wall fragment 28 of just one of the branches of the "U"-shaped section of said oblong single part 21, has a tab 32 projecting orthogonally from it and which is coplanar with the bottom fragment 29 of the base of said "U"-shaped straight section.

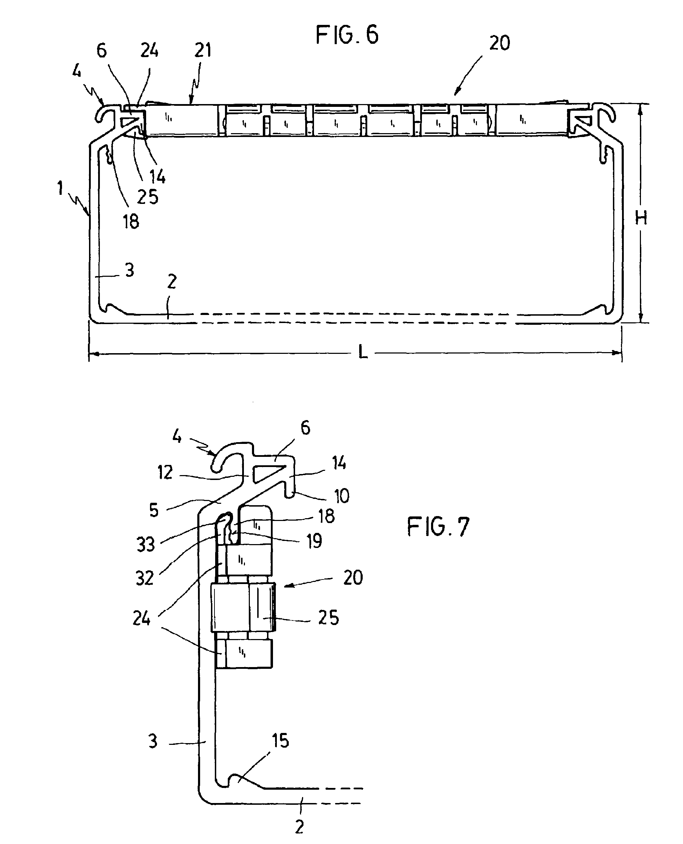

Projecting tabs 32 have on their cantilever edge a slight, longitudinal arch 33 intended to fit between the tooth form 19 of small partition 18 of raceway 1 and the actual wall 3 thereof, as can be seen in Fig. 7, in order to keep retainer 20 in the waiting position and to contain it without a specific function in the raceway 1 proper.

## Claims

1. Raceway for electrical conductors, said raceway (1) being made by extruding a synthetic plastics material and being configured as a channel-shaped section made up of a bottom strip (2) flanked orthogonally by two opposite walls (3), that are symmetrical with respect to a middle plane which is perpendicular to said bottom strip (2), said opposite walls (3) forming on their free end a channel-shaped edge (4) for fitting a cover section, **characterized in that** the top end of each of said opposite walls (3) has an inclined marginal area (5), that is tilted upwards and towards the inside of said raceway (1), and on the top face of said inclined marginal area (5) a seating flap (6) is arranged that is parallel to said bottom strip (2) and which forms, together with said inclined marginal area (5) and said channel-shaped edge (4), a tubular section (8) in cantilever arrangement from the free end of which (9) there emerges a short anchoring wing (10) that is perpendicular to said bottom strip (2).

2. Raceway for electrical conductors according to claim 1, **characterized in that** said inclined marginal area (5) on the top end of opposite walls (3) establishes a space (11) for locating said channel-shaped edge (4), with said channel-shaped edge (4) being made up of a straight portion (12) followed by an arched portion (13) that is open towards said inclined marginal area (5) and extends over the latter (5) without projecting out of it, said straight portion (12) emerging from said inclined marginal area (5) and extending to said seating flap (6), that emerges orthogonally from the back of said straight portion (12), so that the end of said seating flap (6) coincides together with the end of said inclined marginal area (5) in a narrow, vertical slat (14) that projects forming said anchoring wing (10) in cantilever arrangement towards said bottom strip (2).

3. Raceway for electrical conductors according to claims 1 or 2, **characterized in that** from the inner face of said inclined marginal area (5) of the free end of wall (3), next to said wall (3) there emerges a small partition (18) parallel to said wall (3).

4. Raceway for electrical conductors according to claim 3, **characterized in that** at the side ends of said bottom strip (2), near the intersection of said bottom strip (2) with the bottom portion of each of said bottom walls (3), a wedge-shaped projection (15) is arranged having its inclined side (16) tilted towards the middle plane of said bottom strip (2) and its short side (17) parallel to the bottom portion of said wall (3) and coplanar to said small partition (18).

5. Raceway for electrical conductors according to the claims 3 or 4, **characterized in that** said small partition (18) has, on its face that looks towards the inner face of said wall (3), a toothed form (19) with its apices pointing towards said inner face .

6. Raceway for electrical conductors according to any of the claims 1 to 5, **characterized in that** said short anchoring wing (10) has its edge biselled in a convex curve.

7. Raceway for electrical conductors according to any of the claims 2 to 5, **characterized in that** said inclined marginal area (5) at the top end of the opposite walls (3), said straight portion (12) of channel-shaped edge (4) and said seating flap (6) delimit a hollow space (20) with a triangular cross-section.

8. Retainer for electrical conductors suitable for being applied to a raceway according to any of the claims 1 to 7, said retainer (20) being made up of an oblong single part (21) that has a "U"-shaped straight section and which is differentiated in a plurality of separable, longitudinal parts (22, 23), with the two end parts (22) being the same and being provided with the same attachment means suitable for attaching to the top ends of the opposite side walls (3) of said raceway (1), whereas the inner parts (23) have a different structure to that of said end parts (22) and are provided with attachment means (26, 27) that are suitable for attaching to the top seamed edges (36) of detachable, longitudinal compartment partitions (35) that may be provided in raceway (1), **characterized in that** said attachment means on end parts (22), suitable for attaching to the top ends of the opposite side walls (3) of raceway (1), are made up of an elastic clamp arrangement comprising two flat, coplanar flanges (24), that are separate and in cantilever arrangement, and an elastic, hooked finger (25) facing the separation space between said flat flanges (24).

9. Retainer for electrical conductors according to claim 8, comprising wall fragments (28) corresponding to each branch of said "U"-shaped straight section of the oblong single part (21) and bottom fragments (29) corresponding to the base of said "U"-shaped section, with said contiguous separable parts (22, 23) being joined together by breakage lines (30) provided in joining areas of said bottom fragments (29) with said wall fragments (28), and with breaking bridges (31) being provided between each of said wall fragments (28) and the contiguous wall fragment (28), **characterized in that** it comprises projecting tabs (32) that emerge orthogonally from said wall fragments (28) and are coplanar with said bottom fragments (29).

10. Retainer for electrical conductors according to claim 9, **characterized in that** said projecting tabs (32) have a slight, longitudinal arch (33) on their cantilever edge.
